# EUROPÄISCHE PATENTSCHRIFT

(11) **EP 3 808 810 B1**
(45) Veröffentlichungstag und Bekanntmachung des Hinweises auf die Patenterteilung: **29.03.2023**
(21) Anmeldenummer: 20201941.0
(22) Anmeldetag: 15.10.2020
(51) Int. Cl.: C08L 25/12, C08L 77/02, C08L 51/04, C08L 23/26, B29C 41/06

(54) **THERMOPLASTISCHE FORMMASSEN FÜR ROTOMOLDING-VERFAHREN**
THERMOPLASTIC MOULDING MATERIALS FOR ROTOMOULDING METHOD
MATIÈRES DE MOULAGE THERMOPLASTIQUES POUR UN PROCÉDÉ DE ROTOMOULAGE

(30) Priorität: 16.10.2019 EP 19203481
(43) Veröffentlichungstag der Anmeldung: 21.04.2021
(73) Patentinhaber: INEOS Styrolution Group GmbH, 60325 Frankfurt (DE)
(72) Erfinder: Gschwind, Stephan, 81245 München (DE); Rath, Peter, 51069 Köln (DE); Landen, Ingo, 51377 Leverkusen (DE); Ruthard, Christian, 55124 Mainz (DE); Kerschbaumer, Hannes, 65812 Bad Soden am Taunus (DE); Wilhelmus, Bianca, 63456 Hanau (DE); Niessner, Norbert, 67159 Friedelsheim (DE); Terlau, Klaus, 47877 Willich (DE); Wiebe, Viktor, 51643 Gummersbach (DE); Herbst, Lars-Hilmar, 22391 Hamburg (DE)
(74) Vertreter: Jacobi, Markus Alexander

(56) Entgegenhaltungen:
- WO-A1-2013/104528
- US-A1- 2005 051 926

## Beschreibung

Die vorliegende Erfindung betrifft thermoplastische Formmassen für Rotomolding-Verfahren sowie Formkörper hergestellt durch ein Rotationsschmelzverfahren ("Rotomolding"). Die Erfindung betrifft auch die Verwendung von thermoplastischen (Harz)-Zusammensetzungen, enthaltend amorphe (Co-)polymere auf Basis von aromatischen Vinylmonomeren, teilkristalline Polymere und einen Verträglichkeitsvermittler für die Herstellung von Formkörpern durch ein Rotationsschmelzverfahren, sowie ein Verfahren zur Herstellung eines Formkörpers durch ein Rotationsschmelzverfahren unter Verwendung dieser thermoplastischen Zusammensetzungen, und einen Formkörper hergestellt durch ein Rotationsschmelzverfahren unter Verwendung dieser thermoplastischen Zusammensetzungen.

Rotationsschmelzverfahren werden seit Jahren zur Herstellung von Formkörpern verschiedener Größen aus Kunststoffen eingesetzt. Bei den Formkörpern handelt es sich typischerweise um Hohlkörper aus thermoplastischen Polymeren. Im Verfahren wird eine thermoplastische Harzzusammensetzung in den formgebenden Teil eines beheizbaren Werkzeugs gegeben, das unter Beheizung um zwei senkrecht zueinander stehende Drehachsen rotiert wird. Die thermoplastische Zusammensetzung wird aufgeschmolzen und an die Innenwände des formgebenden Teils des beheizbaren Werkzeugs gedrückt. Dies führt zu einer gleichmäßigen Verteilung der Zusammensetzung über die Innenwände. Nach dem Abkühlen des Werkzeugs kann aus dem formgebenden Teil ein hohler Formkörper mit (relativ) konstanter Wanddicke entnommen werden. Rotationsschmelzverfahren (Rotomolding, Rotationsformen oder Rotationsgießen), werden z.B. in "Kunststoffchemie für Ingenieure, Von der Synthese bis zur Anwendung" (W. Kaiser, 2. Auflage, Hanser Verlag 2007; Seiten 190-191) beschrieben.

Bislang wird das Rotationsschmelzverfahren insbesondere für Polyethylen (PE) angewandt. Die daraus hergestellten Formkörper haben dann die typischen Eigenschaften des Polyethylens und sind oft für besondere Anforderungen eines Anwenders nicht geeignet. Beispielsweise ist das Lackieren von Polyethylen-Formkörpern aufgrund des unpolaren Charakters des Polyethylens nicht gut durchführbar. US 4,252,762 beschreibt ein Verfahren, bei dem die Dekoration von Polyethylen-Formkörpern direkt im Rotationsschmelzverfahren durchgeführt wird. Dies ist kompliziert, da eine Schablone mit einer öligen Pigmentdispersion auf die Innenwand des formgebenden Teils der Rotationsschmelzvorrichtung bereits vor dem Rotationsschmelzverfahren aufgebracht werden muss. Eine nachträgliche Lackierung wird nicht ermöglicht.

Des Weiteren ist das Rotationsschmelzverfahren auch für die Herstellung von Formkörpern aus Polyamiden bekannt. US 2005/051926 offenbart die Verarbeitung von Polyamiden zu Hohlkörpern durch ein Rotationsschmelzverfahren. Aufgrund des polaren Charakters der Polyamide sind die Formkörper gut bedruckbar. Allerdings sind Polyamide oftmals teilkristallin, sodass die Verarbeitung zu Formkörpern erschwert sein kann. Insbesondere besteht die Schwierigkeit, dass oberhalb des Schmelzpunktes der teilkristallinen Polyamide die Viskosität des Polymers für die Anwendung im Rotationsschmelzverfahren zu niedrig ist, während unterhalb des Schmelzpunktes die Viskosität noch zu hoch ist.

Alternative polare Polymere haben ebenfalls anwendungstechnische Nachteile, wie Polyvinylchlorid (PVC), welches bei thermischer Beanspruchung HCl abspalten kann, und Polyethylenterephthalat (PET), welches, falls nicht komplett vorgetrocknet, in dem Rotationsschmelzverfahren abgebaut werden kann.

Styrol-(Co-)polymere sind seit Jahrzehnten bekannt. Sie sind polarer als Polyethylen, so dass prinzipiell eine bessere Lackierbarkeit gegeben sein kann. Sie sind meist amorph, so dass die Nachteile von teilkristallinen Materialien reduziert werden können. Allerdings besteht bei Styrol-(Co-)polymeren die Schwierigkeit, dass sie bislang aufgrund von oftmals geringer Fließfähigkeit, Oxidations-Empfindlichkeit, und Sprödigkeit der Materialien für Rotationsschmelzverfahren nicht gut geeignet erschienen.

Überraschenderweise wurde nun gefunden, dass bestimmte thermoplastische Zusammensetzungen (Formmassen), enthaltend amorphe und teilkristalline Polymer-Komponenten im Rotationsschmelzverfahren Vorteile gegenüber den oben genannten Polymeren zeigen.

Ein Gegenstand der vorliegenden Erfindung ist die Verwendung einer thermoplastischen Zusammensetzung enthaltend:
a) von 5 bis 60 Gew.-%, oftmals 8 bis 55 Gew.-%, bezogen auf das Gesamtgewicht der Komponenten (A), (B), (C) und (D), mindestens eines amorphen thermoplastischen (Co-)polymers als Komponente (A), enthaltend Wiederholungseinheiten, die von mindestens einem aromatischen Vinylmonomer stammen;
b) von 30 bis 90 Gew.-%, oftmals 35 bis 85 Gew.-%, bezogen auf das Gesamtgewicht der Komponenten (A), (B), (C) und (D), mindestens eines teilkristallinen Polymers als Komponente (B);
c) von 0,5 bis 10 Gew.-%, insbesondere 0,8 bis 9 Gew.-%, bezogen auf das Gesamtgewicht der Komponenten (A), (B), (C) und (D), mindestens eines copolymeren Verträglichkeitsvermittlers als Komponente (C), der geeignet ist, die Verträglichkeit der Komponente (A) und der Komponente (B) zu verbessern; und
d) von 0 bis 10 Gew.-%, insbesondere 0,1 bis 10 Gew.-%, bezogen auf das Gesamtgewicht der Komponenten (A), (B), (C) und (D), weiterer Zusatzstoff(e) als Komponente (D);

wobei die Summe der Gew.-% der Komponenten (A), (B), (C) und (D) 100 Gew.-% ergibt,
für die Herstellung eines Formkörpers durch ein Rotationsschmelzverfahren.

Die einzelnen Komponenten der für die Herstellung eines Formkörpers und für den Einsatz im Rotationsschmelzverfahren verwendeten thermoplastischen Zusammensetzung werden nachfolgend näher erläutert. Die Verwendung ähnlicher Formmassen für die Herstellung von Spritzgussteilen durch ein Spritzgussverfahren ist beispielsweise in WO 2013/104528 offenbart.

### Komponente (A)

Als Komponente (A) enthalten die erfindungsgemäß verwendeten thermoplastischen Zusammensetzungen 5 bis 60 Gew.-%, bevorzugt 8 bis 55 Gew.-%, besonders bevorzugt 10 bis 50 Gew.-%, ganz besonders bevorzugt 12 bis 30 Gew.-%, oftmals 23 Gew.-%, bezogen auf das Gesamtgewicht der Komponenten (A), (B), (C) und (D), mindestens eines amorphen thermoplastischen (Co-)polymers. Dieses enthält Wiederholungseinheiten, die von mindestens einem aromatischen Vinylmonomer stammen.

Bei den Wiederholungseinheiten, die von mindestens einem aromatischen Vinylmonomer stammen, handelt es sich bevorzugt um Monomere ausgewählt aus der Gruppe bestehend aus Styrol und methylierten Styrolen, wie alpha-Methylstyrol, 2-Methylstyrol, 3-Methylstyrol, 4-Methylstyrol. Besonders bevorzugte aromatische Vinylmonomere sind hierbei Styrol und alpha-Methylstyrol, insbesondere Styrol.

Demnach wird in einer besonders bevorzugten Ausführungsform eine thermoplastische Zusammensetzung mit 5 bis 60 Gew.-%, bevorzugt 8 bis 55 Gew.-%, besonders bevorzugt 10 bis 50 Gew.-%, ganz besonders bevorzugt 12 bis 30 Gew.-%, oftmals 23 Gew.-%, bezogen auf das Gesamtgewicht der Komponenten (A), (B), (C) und (D), mindestens eines amorphen thermoplastischen (Co-)polymers enthaltend Wiederholungseinheiten, die von Styrol stammen, verwendet. Oftmals wird SAN verwendet.

Bevorzugt enthält die Komponente (A) neben den Wiederholungseinheiten, die von mindestens einem aromatischen Vinylmonomer stammen, weitere Wiederholungseinheiten. Diese zusätzlichen Wiederholungseinheiten können beispielsweise von Vinylcyanid-Monomeren, Alkylacrylat-Monomeren, Alkylmethacrylat-Monomeren, Alkylacrylamid-Monomeren und/oder Butadien-Monomeren stammen. Besonders bevorzugt enthält die Komponente (A) neben den Wiederholungseinheiten, die von mindestens einem aromatischen Vinylmonomer stammen, zusätzlich Wiederholungseinheiten, die von mindestens einem Vinylcyanid-Monomer, insbesondere Acrylnitril, stammen.

Demnach wird in einer besonders bevorzugten Ausführungsform eine thermoplastische Zusammensetzung mit 5 bis 60 Gew.-%, bevorzugt 8 bis 55 Gew.-%, besonders bevorzugt 10 bis 50 Gew.-%, ganz besonders bevorzugt 12 bis 30 Gew.-%, oftmals 23 Gew.-%, bezogen auf das Gesamtgewicht der Komponenten (A), (B), (C) und (D), mindestens eines amorphen thermoplastischen Copolymers enthaltend Wiederholungseinheiten, die von Styrol stammen, und Wiederholungseinheiten, die von Acrylnitril stammen, verwendet.

Bei dem mindestens einen (Co-)polymer der Komponente (A) kann es sich sowohl um ein ungepfropftes (Co-)polymer(Harz) als auch um ein gepfropftes (Co-)polymer, oder um eine Mischung aus ungepfropftem und gepfropftem (Co-)polymer handeln. Häufig werden z. B. ein SAN-Harz und ein oder mehrere Acrylat-Kautschuke eingesetzt.

Bevorzugt umfasst die Komponente (A) eine Mischung aus:
a1) 20 bis 60 Gew.-%, bevorzugt von 25 bis 50 Gew.-%, besonders bevorzugt von 30 bis 40 Gew.-%, bezogen auf das Gesamtgewicht der Unterkomponenten (A1) und (A2), ungepfropftem Copolymer als Unterkomponente (A1), enthaltend Wiederholungseinheiten, die von aromatischen Vinylmonomer stammen, und Wiederholungseinheiten, die von Vinylcyanid-Monomer stammen; und
a2) 40 bis 80 Gew.-%, bevorzugt von 50 bis 75 Gew.-%, besonders bevorzugt von 60 bis 70 Gew.-% bezogen auf das Gesamtgewicht der Unterkomponenten (A1) und (A2), mindestens eines Pfropfkautschuks als Unterkomponente (A2), umfassend eine kautschukartige Pfropfgrundlage und eine auf die Pfropfgrundlage gepfropfte Pfropfauflage enthaltend Wiederholungseinheiten, die von aromatischem Vinylmonomer stammen, und Wiederholungseinheiten, die von Vinylcyanid-Monomer stammen.

### Unterkomponente (A1)

Als Unterkomponente (A1) werden ungepfropfte Copolymere, enthaltend Wiederholungseinheiten, die von aromatischem Vinylmonomer stammen, und Wiederholungseinheiten, die von Vinylcyanid-Monomer stammen, verwendet. Bevorzugt sind Styrolcopolymere, wobei diese Styrol-Copolymere besonders bevorzugt aus zwei oder mehreren Monomeren aus der Gruppe Styrol, Acrylnitril und Methylstyrol aufgebaut sind. Als Styrolcopolymere können insbesondere Styrol-Acrylnitril-Copolymer (SAN) oder andere kautschukfreie Styrol-Copolymere verstanden werden. Beispiele für die Unterkomponente (A1) sind gängige Copolymer-Matrices wie z. B. durch Massepolymerisation, Emulsions- oder Lösungsmittelpolymerisation hergestellte Styrol-Acrylnitril-Copolymere, siehe z.B. Luran^{®} der INEOS Styrolution (Frankfurt). Auch Mischungen von Matrices sind geeignet, beispielsweise wie in Ullmann's Encyclopedia of Industrial Chemistry (VCH-Verlag, 5. Ausgabe, 1992, S. 633 f.) beschrieben.

Ebenfalls bevorzugt als Unterkomponente (A1) sind Styrol-Copolymere, wobei diese Styrol-Copolymere aus zwei oder drei Monomeren aus der Gruppe Styrol, Acrylnitril und/oder α-Methylstyrol aufgebaut sind. Die Unterkomponente (A1) wird vorzugsweise aus den Komponenten Acrylnitril und Styrol und/oder α-Methylstyrol durch Massepolymerisation oder in Gegenwart eines oder mehrerer Lösungsmittel hergestellt. Bevorzugt sind dabei Copolymere mit Molmassen Mw von 15.000 bis 300.000 g/mol, wobei die Molmassen z. B. durch Lichtstreuung in Tetrahydrofuran bestimmt werden können (GPC mit UV-Detektion).

Die Unterkomponente (A1) kann z. B. enthalten:
(A1a) Polystyrolacrylnitril, hergestellt aus, bezogen auf (A1a), 60 bis 85 Gew.-% Styrol und 15 bis 40 Gew.-% Acrylnitril, oder
(A1b) Poly-α-Methylstyrolacrylnitril, hergestellt aus, bezogen auf (A1b), 60 bis 85 Gew.% α-Methylstyrol und 15 bis 40 Gew.-% Acrylnitril, oder
(A1c) eine Mischung aus (A1a) und (A1b).

Die Unterkomponente (A1) kann auch durch Copolymerisation von Acrylnitril, Styrol und α-Methylstyrol gewonnen werden.

Als Unterkomponente (A1) wird insbesondere bevorzugt das Copolymer von Styrol und Acrylnitril verwendet.

Das zahlengemittelte Molekulargewicht (Mn) der Unterkomponente (A1) beträgt vorzugsweise von 15.000 bis 150.000 g/mol (bestimmt mittels GPC mit UV-Detektion).

Die Viskosität (VZ) der Unterkomponente (A1) beträgt (gemessen nach DIN 53726 bei 25°C in einer 0,5 gew.-%igen Lösung in DMF) z. B. von 50 bis 120 ml/g. Durch Massepolymerisation bzw. Lösungspolymerisation in z.B. Toluol oder Ethylbenzol kann die Unterkomponente (A1) hergestellt werden nach einem Verfahren, wie es beispielsweise im Kunststoff-Handbuch, Vieweg-Daumiller, Band V, (Polystyrol), Carl-Hanser-Verlag, München 1969, Seiten 122 f., Zeilen 12 ff. beschrieben wird.

### Unterkomponente (A2)

Als Unterkomponente (A2) werden Pfropfkautschuke umfassend eine kautschukartige Pfropfgrundlage und eine auf die Pfropfgrundlage gepfropfte Pfropfauflage enthaltend Wiederholungseinheiten, die von aromatischem Vinylmonomer stammen, und Wiederholungseinheiten, die von Vinylcyanid-Monomer stammen, verwendet.

Als Pfropfgrundlage geeignet sind beispielsweise Dienkautschuke auf Basis von Dienen, wie z. B. Butadien oder Isopren, Alkylacrylatkautschuke auf Basis von Alkylestern der Acrylsäure, wie n-Butylacrylat und 2-Ethylhexylacrylat, EPDM-Kautschuke auf Basis von Ethylen, Propylen und einem Dien, Siliconkautschuke auf Basis von Polyorganosiloxanen, oder Mischungen dieser Kautschuke.

Bevorzugt als Pfropfgrundlage sind Alkylacrylat-basierte Kautschuke und Butadien-basierte Kautschuke, insbesondere Alkylacrylat-basierte Kautschuke. In einer besonders bevorzugten Ausführungsform wird als Unterkomponente (A2) ein Pfropfkautschuk mit n-Butylacrylat als Pfropfgrundlage verwendet.

Die Pfropfauflage ist vorzugsweise aus Styrol und Acrylnitril und gegebenenfalls α-Methylstyrol, Ethylacrylat und/oder Methylacrylamid aufgebaut. Zur Erläuterung der Pfropfkautschuke der Unterkomponente (A2) und deren Herstellung wird auf die Beschreibung in Ullmann's Encyclopedia of Industrial Chemistry 5. Auflage, VCH, 1992, Seiten 633f. verwiesen.

Besonders bevorzugt ist als Unterkomponente (A2) ein Pfropfpolymer aus einer Pfropfgrundlage, insbesondere einer vernetzten Dien- oder Alkylacrylat-Pfropfgrundlage, und einer oder mehrerer Pfropfauflage, insbesondere einer oder mehrerer Styrol-, Acrylnitril-Pfropfauflagen.

In einer bevorzugten Ausführungsform wird die Pfropfauflage in Unterkomponente (A2) hergestellt aus, bezogen auf das Gesamtgewicht der Pfropfauflage, 60 bis 85 Gew.-% Styrol und 15 bis 40 Gew.-% Acrylnitril.

Bei der Unterkomponente (A2) handelt es sich vorzugsweise um eine Mischung aus mindestens einem feinteiligen Pfropfkautschuk (A21) und mindestens einem grobteiligen Pfropfkautschuk (A22), was zu einer mindestens bimodalen Teilchengrößenverteilung der Unterkomponente (A2) führt. Hierbei hat der feinteilige Pfropfkautschuk (A21) vorzugsweise eine mittlere Teilchengröße (Gewichtsmittel) von 40 bis 150 nm, besonders vorzugsweise von 60 bis 120 nm, ganz besonders vorzugsweise von 80 bis 100 nm. Der grobteilige Pfropfkautschuk (A22) hat vorzugsweise eine mittlere Teilchengröße (Gewichtsmittel) von 300 bis 800 nm, besonders vorzugsweise von 400 bis 650 nm, ganz besonders vorzugsweise von 450 bis 550 nm. Die Teilchengrößenverteilung und die mittleren Teilchengrößen (Gewichtsmittel) können z.B. mittels einer analytischen Ultrazentrifuge entsprechend der Methode von W. Scholtan und H. Lange, Kolloid-Z, und Z.-Polymere 250 (1972), Seiten 782 bis 796, bestimmt werden.

In den Fällen, in denen die Unterkomponente (A2) eine Mischung aus mindestens einem feinteiligen Pfropfkautschuk (A21) und mindestens einem grobteiligen Pfropfkautschuk (A22) ist, liegt das Gewichtsverhältnis von (A21):(A22) vorzugsweise zwischen 30:70 und 70:30, besonders vorzugsweise zwischen 40:60 und 60:40, ganz besonders vorzugsweise zwischen 45:55 und 55:45.

Die Komponente (A) umfasst in einer insbesondere bevorzugten Ausführungsform ein Styrol-Acrylnitril-Copolymer (SAN) als Unterkomponente (A1) und ein Acrylnitril-Styrol-Butylacrylat-Pfropfkautschuk (ASA) und/oder ein Acrylnitril-Butadien-Styrol-Pfropfkautschuk (ABS), bevorzugt ein ASA-Pfropfkautschuk, als Unterkomponente (A2).

Bevorzugt liegt das Gewichtsverhältnis von (A1):(A2) vorzugsweise zwischen 30:70 und 70:30, besonders vorzugsweise zwischen 40:60 und 60:40, ganz besonders vorzugsweise zwischen 45:55 und 55:45. In einer bevorzugten Ausführungsform werden 23 Gew.-% SAN und 24 Gew.-% ASA verwendet.

### Komponente (B)

Als Komponente (B) enthalten die erfindungsgemäß verwendeten thermoplastischen Harzzusammensetzungen 30 bis 90 Gew.-%, bevorzugt 35 bis 85 Gew.-%, besonders bevorzugt 40 bis 80 Gew.-%, ganz besonders bevorzugt 60 bis 78 Gew.-%, bezogen auf das Gesamtgewicht der Komponenten (A), (B), (C) und (D), mindestens eines teilkristallinen Polymers.

Das teilkristalline Polymer ist bevorzugt ausgewählt aus der Gruppe bestehend aus teilkristallinem Polyethylen, teilkristallinem Polypropylen, teilkristallinem Polyester und teilkristallinem Polyamid. Oftmals wird z.B. ein Polyamid PA-6 eingesetzt.

Unter teilkristallin im Sinne der vorliegenden Erfindung ist zu verstehen, dass das Polymer nicht vollständig kristallin und nicht amorph ist. Typischerweise liegt der mittels Röntgenbeugung (Röntgen-Diffraktometrie) bestimmbare kristalline Anteil des teilkristallinen Polymers zwischen 10 und 90%, bevorzugt zwischen 15 und 80%, besonders bevorzugt zwischen 20 und 50%.

Besonders bevorzugt handelt es sich bei der Komponente (B) um ein teilkristallines Polyamid, wobei es sich um Homopolyamide, Copolyamide oder Mischungen daraus handeln kann.

Die Polyamide der erfindungsgemäß verwendeten thermoplastischen Harzzusammensetzung weisen im allgemeinen eine Viskositätszahl von 70 bis 350, vorzugsweise 70 bis 170 ml/g auf, bestimmt in einer 0,5 gew.-%igen Lösung in 96 gew.-%iger Schwefelsäure bei 25°C gemäß DIN EN ISO 307:2017.

Teilkristalline Polyamide mit einem Molekulargewicht (Gewichtsmittelwert) von mindestens 5.000, wie sie z.B. in den alten Patentschriften US 2071250, US 2071251, US 2130523, US 2130948, US 2241322, US 2312966, US 2512606 und US 3393210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 4 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 4 bis 12, insbesondere 6 bis 8 Kohlenstoffatomen sowie m-Xylylendiamin, Di-(4-aminophenyl)methan, Di-(4-aminocyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten.

Weiterhin geeignete Polyamide sind erhältlich aus ω-Amino-alkylnitrilen wie beispielsweise Amino-capronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP-A 922065 beschrieben.

Außerdem sind Polyamide geeignet, die z.B. durch Kondensation von 1,4-Diamino-butan mit Adipinsäure unter erhöhter Temperatur erhältlich sind (Polyamid 4,6). Herstellungsverfahren für Polyamide dieser Struktur sind z.B. in den EP-A 038094, EP-A 038582 und EP-A 039524 beschrieben. Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299444).

Die Herstellung der bevorzugten teilaromatischen Copolyamide mit niedrigem Triamingehalt kann nach den in den EP-A 129195 und EP-A 129196 beschriebenen Verfahren erfolgen.

Die nachfolgende nicht abschließende Aufstellung enthält die genannten, sowie weitere Polyamide A) und die enthaltenen Monomeren. Diese spielen für die Erfindung eine Rolle, wenn sie einen kristallinen Anteil zwischen 10 und 90%, bevorzugt zwischen 15 und 80%, besonders bevorzugt zwischen 20 und 50% aufweisen.

### AB-Polymere:

- PA 4: Pyrrolidon
- PA 6: ε-Caprolactam
- PA 7: Ethanolactam
- PA 8: Capryllactam
- PA 9: 9-Aminopelargonsäure
- PA 11: 11-Aminoundecansäure
- PA 12: Laurinlactam

### AA/BB-Polymere

- PA 46: Tetramethylendiamin, Adipinsäure
- PA 66: Hexamethylendiamin, Adipinsäure
- PA 69: Hexamethylendiamin, Azelainsäure
- PA 610: Hexamethylendiamin, Sebacinsäure
- PA 612: Hexamethylendiamin, Decandicarbonsäure
- PA 613: Hexamethylendiamin, Undecandicarbonsäure
- PA 1212: 1,12-Dodecandiamin, Decandicarbonsäure
- PA 1313: 1,13-Diaminotridecan, Undecandicarbonsäure
- PA 6T: Hexamethylendiamin, Terephthalsäure
- PA 9T: Nonyldiamin/Terephthalsäure
- PA MXD6: m-Xylylendiamin, Adipinsäure

- PA 6I: Hexamethylendiamin, Isophthalsäure
- PA 6-3-T: Trimethylhexamethylendiamin, Terephthalsäure
- PA 6/6T: (siehe PA 6 und PA 6T)
- PA 6/66: (siehe PA 6 und PA 66)
- PA 6/12: (siehe PA 6 und PA 12)
- PA 66/6/610: (siehe PA 66, PA 6 und PA 610)
- PA 6I/6T: (siehe PA 6I und PA 6T)
- PA PACM 12: Diaminodicyclohexylmethan, Laurinlactam
- PA 6I/6T/PACM: wie PA 6I/6T + Diaminodicyclohexylmethan
- PA 12/MACMI: Laurinlactam, Dimethyl-diaminodicyclohexylmethan, Isophthalsäure
- PA 12/MACMT: Laurinlactam, Dimethyl-diaminodicyclohexylmethan, Terephthalsäure
- PA PDA-T: Phenylendiamin, Terephthalsäure.

Als Komponente B können die erfindungsgemäß verwendeten thermoplastischen Harzzusammensetzungen eines oder mehrere Polyamide mit, bezogen auf die gesamte Komponente B, 0,1 - 0,2 Gew.-% Triacetondiamin (TAD)-Endgruppen enthalten.

In einer insbesondere bevorzugten Ausführungsform wird als Komponente (B) Polyamid 6 verwendet. Dieses kann z.B. in einer Menge von 46 Gew.-% eingesetzt werden.

### Komponente (C)

Als dritte Komponente (C) enthalten die erfindungsgemäß verwendeten thermoplastischen Harzzusammensetzungen 0,5 bis 10 Gew.-%, bevorzugt 1 bis 8 Gew.-%, besonders bevorzugt 2 bis 7 Gew.-%, ganz besonders bevorzugt 3 bis 6 Gew.-%, bezogen auf das Gesamtgewicht der Komponenten (A), (B), (C) und (D), mindestens eines copolymeren Verträglichkeitsvermittlers, der geeignet ist, die Verträglichkeit der Komponente (A) und der Komponente (B) zu verbessern. Oftmals werden auch zwei verschiedene Verträglichkeitsvermittler verwendet.

Geeignete Verträglichkeitsvermittler sind z.B. Copolymere enthaltend Wiederholungseinheiten (C1), die von mindestens einem aromatischen Vinylmonomer stammen, Wiederholungseinheiten (C2), die von wenigstens einem Monomer ausgewählt aus der Gruppe der C₂- bis C₁₂-Alkylmethacrylate, C₂- bis C₁₂-Alkylacrylate und Vinylcyanide, stammen, und Wiederholungseinheiten (C3), die von mindestens einer ethylenisch ungesättigten Dicarbonsäure oder einem ethylenisch ungesättigten Dicarbonsäure-Anhydrid, stammen.

Bevorzugt handelt es sich bei dem Verträglichkeitsvermittler um ein Copolymer enthaltend Wiederholungseinheiten (C1), die von mindestens einem aromatischen Vinylmonomer, bevorzugt Styrol, stammen, Wiederholungseinheiten (C2), die von mindestens einem Vinylcyanid-Monomer, bevorzugt Acrylnitril, stammen, und Wiederholungseinheiten (C3), die von mindestens einer ethylenisch ungesättigten Dicarbonsäure oder einem ethylenisch ungesättigten Dicarbonsäure-Anhydrid, bevorzugt Maleinsäureanhydrid, stammen. Insbesondere bevorzugt als Komponente (C) sind Copolymere von Styrol, Acrylnitril und Maleinsäureanhydrid.

Die Menge an Wiederholungseinheiten, die von Maleinsäureanhydrid (MSA) stammen, in Komponente (C) kann in weiten Grenzen schwanken und beträgt in der Regel 0,2 bis 4 Gew.-%, bevorzugt 0,4 bis 3 Gew.-%, besonders bevorzugt 0,8 bis 2,3 Gew.-%. In diesen Bereichen werden besonders gute mechanische Eigenschaften bezüglich Zugfestigkeit und Schlagzähigkeit erzielt. Geeignet sind z.B. 2 Gew.-% an S-AN-MSA.

Die Komponente (C) kann in an sich bekannter Weise hergestellt werden. Eine geeignete Methode ist das Lösen der Monomerkomponenten der Komponente (C), z. B. des Styrols, Maleinsäureanhydrids oder Acrylnitrils in einem geeigneten Lösemittel, z. B. Methylethylketon (MEK). Zu dieser Lösung werden ein oder gegebenenfalls mehrere chemische Initiatoren hinzugesetzt. Geeignete Initiatoren sind z. B. Peroxide. Sodann wird das Gemisch für mehrere Stunden bei erhöhter Temperatur polymerisiert. Anschließend werden das Lösemittel und die nicht umgesetzten Monomere in an sich bekannter Weise entfernt.

Das Verhältnis zwischen der Komponente (C1) (aromatisches Vinyl-Monomer) und der Komponente (C2), z. B. dem Acrylnitril-Monomer in der Komponente (C) liegt vorzugsweise zwischen 80:20 und 50:50.

Um die Mischbarkeit der Komponente (C) mit der Komponente (B) zu verbessern wird vorzugsweise eine Menge an aromatischem Vinyl-Monomer (C1) ausgewählt, die der Menge des aromatischen Vinyl-Monomers in Komponente (B) entspricht.

Die Copolymere der Komponente (C) haben im allgemeinen Molekulargewichte Mw im Bereich von 30.000 bis 500.000 g/mol vorzugsweise von 50.000 bis 250.000 g/mol, insbesondere von 70.000 bis 200.000 g/mol, bestimmt durch GPC unter Verwendung von Tetrahydrofuran (THF) als Eluent und mit Polystyrol-Kalibrierung.

Ferner können auch Styrol-N-Phenylmaleinimid-Maleinsäureanhydrid-Terpolymere eingesetzt werden.

### Komponente (D)

Als Komponente (D) umfasst die erfindungsgemäß verwendete thermoplastische Harzzusammensetzung bis zu 10 Gew.-%, bevorzugt 0,1 bis 10 Gew.-% besondes bevorzugt 0,5 bis 9 Gew.-%, besonders bevorzugt 1 bis 6 Gew.-%, z.B. 5 Gew.-%, bezogen auf das Gesamtgewicht der Komponenten (A), (B), (C) und (D), weiterer Zusatzstoff(e). Diese Komponenten (D) sind von den Komponenten (A), (B) und (C) verschieden.

Bevorzugt umfasst die Komponente (D) 0,1 bis 5 Gew.-%, bevorzugt 0,2 bis 4 Gew.-%, besonders bevorzugt 0,3 bis 4 Gew.-%, bezogen auf das Gesamtgewicht der Komponenten (A), (B), (C) und (D), eines Fließverbesserers, bevorzugt eines Fließverbesserers auf Basis von Acrylaten. Es werden bevorzugt Alkylacrylat-Oligomere mit einem Gewichtsmittel des Molekulargewichts im Bereich von 1.200 bis 4.000 g/mol, vorzugsweise 1.500 bis 2.000 g/mol eingesetzt. Das Molekulargewicht wird dabei mittels Gelpermeationschromatographie bestimmt, wobei als Elutionsmittel bevorzugt THF verwendet wird. Die Kalibrierung erfolgt mit Polystyrol-Standards. Die Alkylacrylate sind bevorzugt C₁₋₁₂ -Alkylacrylate, insbesondere C₄₋₈-Alkylacrylate.

Besonders bevorzugt werden Butylacrylate oder Ethylhexylacrylate eingesetzt, speziell bevorzugt n-Butylacrylat. Die Herstellung der Alkylacrylat-Oligomere erfolgt nach den bekannten Verfahren der Polymerisation. Die Herstellung der Polybutylacrylate erfolgt vorzugsweise durch radikalische Polymerisation, wobei als Initiatoren Azo- oder Peroxidverbindungen verwendet werden können.

Die Herstellung solcher Verbindungen ist z. B. beschrieben in "Encyclopedia of Polymer Science and Engineering, H. F. Mark (Ed.) J. Wiley & Sons, New York, 1985, Seiten 265 ff., Verfahren zur Herstellung sind ebenfalls im gleichen Dokument ab Seite 269ff beschrieben.

Die Polybutylacrylate können bis 40 Gew.-%, bevorzugt bis 20 Gew.-% eines oder mehrerer copolymerisierbare Monomere enthalten. Bevorzugte Comonomere sind ausgewählt aus der Gruppe bestehend aus Acrylaten, Methacrylaten, Styrol oder dessen Derivaten, Maleinsäureanhydrid, Acrylnitril und Mischungen davon. Bevorzugt werden als Fließverbesserer Polybutylacrylate verwendet, die bei Raumtemperatur flüssig sind.

Weitere Zusatzstoffe, die in der Komponente (D) enthalten sein können, sind beispielsweise Dicarbonsäureanhydride, Füllstoffe, Verarbeitungshilfsmittel, Keimbildungsmittel, Stabilisatoren (z.B. HALS) und Oxidationsverzögerer, Antioxidationsmittel. Mittel gegen Wärmezersetzung und Zersetzung durch ultraviolettes Licht, Gleit- und Entformungsmittel, Flammschutzmittel, Antistatika, Farbstoffe und Pigmente und Weichmacher zu nennen.

Das Eindosieren dieser weiteren Zusatzstoffe kann in jedem Stadium des Herstel-lungsprozesses erfolgen, vorzugsweise jedoch zu einem frühen Zeitpunkt, um frühzeitig die Stabilisierungseffekte (oder anderen speziellen Effekte) des Zusatzstoffes aus-zunutzen. Mittel gegen Wärmezersetzung bzw. Oxidationsverzögerer sind üblicherweise Metall-halogenide (Chloride, Bromide, lodide), die sich von Metallen der Gruppe I des Periodensystems der Elemente ableiten (wie Li, Na, K, Cu).

Als Komponente D geeignete Stabilisatoren sind die üblichen gehinderten Phenole, aber auch "Vitamin E" bzw. analog aufgebaute Verbindungen. Auch Benzophenone, Resorcine, Salicylate, Benzotriazole und andere Verbindungen sind geeignet. Diese werden üblicherweise in Mengen von 0 bis 2 Gew.-%, bevorzugt 0,01 bis 2 Gew.-% (bezogen auf das Gesamtgewicht der erfindungsgemäßen Formmassen) verwendet. Oftmals enthalten die Formmassen in Komponente D keine Stabilisatoren.

Geeignete Gleit- und Entformungsmittel sind Stearinsäuren, Stearylalkohol, Stearin-säureester bzw. allgemein höhere Fettsäuren, deren Derivate und entsprechende Fett-säuregemische mit 12 bis 30 Kohlenstoffatomen. Die Mengen dieser Zusätze liegen -sofern vorhanden - im Bereich von 0,05 bis 1 Gew.-% (bezogen auf das Gesamtge-wicht der erfindungsgemäßen Formmassen).

Auch Silikonöle, oligomeres Isobutylen oder ähnliche Stoffe kommen als Zusatzstoffe in Frage, die üblichen Mengen betragen - sofern vorhanden - 0,05 bis 5 Gew.-% (bezogen auf das Gesamtgewicht der erfindungsgemäßen Formmassen). Pigmente, Farbstoffe, Farbaufheller, wie Ultramarinblau, Phthalocyanine, Titandioxid, Cadmiumsulfide, Derivate der Perylentetracarbonsäure sind ebenfalls verwendbar.

Verarbeitungshilfsmittel und Stabilisatoren, Schmiermittel und Antistatika werden üblicherweise in Mengen von 0 bis 2 Gew.-%, bevorzugt 0,01 bis 2 Gew.-% (bezogen auf das Gesamtgewicht der erfindungsgemäßen Formmassen) verwendet.

In einer Ausführungsform enthält die Komponente (D) mindestens einen Lichtstabilisator, beispielsweise einen Stabilisator des Typs HALS, insbesondere Bis(2,2,6,6-tetramethyl-4-piperidyl)sebacat. Dieser ist vorzugsweise in einer Menge von 0,1 bis 3 Gew.-%, besonders vorzugsweise von 0,5 bis 2 Gew.-%, bezogen auf das Gesamtgewicht der Komponenten (A), (B), (C) und (D) enthalten.

In einer weiteren Ausführungsform enthält die Komponente (D) mindestens ein Antioxidans, beispielsweise ein sterisch gehindertes Phenolderivat, insbesondere Octadecyl-3-(3,5-di-tert-butyl-4-hydroxyphenyl)-propionat. Dieses ist vorzugsweise in einer Menge von 0,01 bis 1 Gew.-%, besonders vorzugsweise von 0,05 bis 0,5 Gew.-%, bezogen auf das Gesamtgewicht der Komponenten (A), (B), (C) und (D) enthalten.

In einer weiteren Ausführungsform enthält die Komponente (D) mindestens einen Wärmestabilisator, beispielsweise ein Derivat eines Thioethers. Geeignet ist beispielsweise 3,3'-Thiodipropionsäuredioctadecylester. Dieser ist vorzugsweise in einer Menge von 0,01 bis 1 Gew.-%, besonders vorzugsweise von 0,05 bis 0,5 Gew.-%, bezogen auf das Gesamtgewicht der Komponenten (A), (B), (C) und (D) enthalten.

In einer bevorzugten Ausführungsform enthält die Komponente (D) mindestens einen Lichtstabilisator, beispielsweise einen Stabilisator des Typs HALS, insbesondere Bis(2,2,6,6-tetramethyl-4-piperidyl)sebacat in einer Menge von 0,1 bis 3 Gew.-%, besonders vorzugsweise von 0,5 bis 2 Gew.-%, bezogen auf das Gesamtgewicht der Komponenten (A), (B), (C) und (D), mindestens ein Antioxidans, beispielsweise ein sterisch gehindertes Phenolderivat, insbesondere Octadecyl-3-(3,5-di-tert-butyl-4-hydroxyphenyl)-propionat in einer Menge von 0,01 bis 1 Gew.-%, besonders vorzugsweise von 0,05 bis 0,5 Gew.-%, bezogen auf das Gesamtgewicht der Komponenten (A), (B), (C) und (D) und mindestens einen Wärmestabilisator, beispielsweise ein Derivat eines Thioethers, insbesondere einen 3,3'-Thiodipropionsäuredioctadecylester in einer Menge von 0,01 bis 1 Gew.-%, besonders vorzugsweise von 0,05 bis 0,5 Gew.-%, bezogen auf das Gesamtgewicht der Komponenten (A), (B), (C) und (D).

Beispielsweise können als Komponente D etwa 5 Gew.-% eines Maleinsäure-funktionalisierten Ethylen-Copolymere (z.B. Exxelor^{®} VA 1801) verwendet werden.

Die Herstellung der erfindungsgemäß verwendeten thermoplastischen Harzzusammensetzungen erfolgt nach an sich bekannten Verfahren durch Mischen der Komponenten. Es kann vorteilhaft sein, einzelne Komponenten vorzumischen. Auch das Mischen der Komponenten in Lösung unter Entfernen der Lösungsmittel ist möglich.

Geeignete organische Lösungsmittel sind beispielsweise Chlorbenzol, Gemische von Chlorbenzol und Methylenchlorid oder Gemische von Chlorbenzol und aromatischen Kohlenwasserstoffen wie Toluol. Vorzugsweise wird ohne chlorhaltige Lösungsmittel gearbeitet. Das Eindampfen der Lösungsmittelgemische kann beispielsweise in Eindampfextrudern erfolgen.

Das Mischen der beispielsweise trockenen Komponenten (A), (B), (C) und (D) kann nach allen bekannten Methoden erfolgen. Vorzugsweise geschieht das Mischen bei Temperaturen von 200 bis 320°C durch gemeinsames Extrudieren, Kneten oder Verwalzen der Komponenten, wobei die Komponenten gegebenenfalls zuvor aus der bei der Polymerisation erhaltenen Lösung oder aus der wässrigen Dispersion isoliert worden sind.

Typischerweise hat die erfindungsgemäß verwendete thermoplastische Harzzusammensetzung eine disperse Phase und eine kontinuierliche Phase. Bevorzugt ist die mittlere Domänengröße der dispersen Phase kleiner als 10 µm, besonders bevorzugt kleiner als 5 µm, ganz besonders bevorzugt kleiner als 2 µm, insbesondere kleiner als 1 µm. Bei solchen Domänengrößen wird die Kompatibilisierbarkeit der Phasen besonders effektiv verbessert. Die Domänengröße wird mittels Elektronenmikroskopie an mit RuO₄-kontrastierten Ultramikrotom-Dünnschichten gemessen.

Ein weiterer Gegenstand der vorliegenden Erfindung ist ein Verfahren zur Herstellung eines Formkörpers durch ein Rotationsschmelzverfahren, umfassend die Schritte:
(I) Einführen einer thermoplastischen Harzzusammensetzung, wie oben beschrieben, in den formgebenden Teil einer Vorrichtung für das Rotationsschmelzverfahren;
(II) Beginnen mindestens bi-axialer Drehung des formgebenden Teils der Vorrichtung für Rotationsschmelzverfahren enthaltend die thermoplastische Harzzusammensetzung;
(III) Erhitzen der thermoplastischen Harzzusammensetzung in dem sich drehenden formgebenden Teil der Vorrichtung für Rotationsschmelzverfahren auf eine Temperatur, die über dem Schmelzbereich der thermoplastischen Harzzusammensetzung liegt;
(IV) Erzeugung einer gleichmäßigen Verteilung der geschmolzenen thermoplastischen Harzzusammensetzung in dem formgebenden Teil der Vorrichtung für das Rotationsschmelzverfahren;
(V) Kühlen der verteilten thermoplastischen Harzzusammensetzung in dem formgebenden Teil der Vorrichtung für das Rotationsschmelzverfahren auf eine Temperatur von 10°- 40° C;
(VI) Beenden der Drehung des formgebenden Teils der Vorrichtung für das Rotationsschmelzverfahren;
(VII) Entnahme des Formkörpers aus dem formgebenden Teil der Vorrichtung für das Rotationsschmelzverfahren.

Optional können mindestens die Schritte (III), (IV) und (V) im Vakuum und/oder unter Schutzgas, bevorzugt Stickstoff oder Argon, besonders bevorzugt Stickstoff, durchgeführt werden, da hierdurch die Oxidation und damit verbundene Vergilbung der Formkörper gemindert wird.

Ebenfalls Gegenstand der vorliegenden Erfindung ist ein Formkörper hergestellt durch ein Rotationsschmelzverfahren unter Verwendung einer thermoplastischen Harzzusammensetzung wie oben beschrieben.

Bevorzugt ist der Formkörper unter Vakuum und/oder Schutzgas, bevorzugt Stickstoff oder Argon, besonders bevorzugt Stickstoff hergestellt. Besonders bevorzugt ist der Formkörper zusätzlich lackiert.

Die Erfindung ist anhand folgender Beispiele und Ansprüche näher beschrieben.

### Beispiele

Folgende Komponenten wurden eingesetzt:
Komponente A1:
   Styrol-Acrylnitril-Copolymer hergestellt aus 81 Gew.-% Styrol und 19 Gew.-% Acrylnitril, mit einer Viskositätszahl von 80 ml/g (bestimmt in 0,5 Gew.-%-iger DMF-Lösung bei 25°C nach DIN EN ISO 1628-1:2012-10).
Komponente A21:
   Pfropfkautschuk (feinteilig), hergestellt aus:
   ß1) 16 g Butylacrylat und 0,4 g Tricyclodecenylacrylat, die in 150 g Wasser unter Zusatz von 1 g des Natriumsalzes einer C12-C18-Paraffinsulfonsäure, 0,3 g Kali-umpersulfat, 0,3 g Natriumhydrogencarbonat unter Rühren auf 60°C erwärmt wurden. 10 Minuten nach dem Anspringen der Polymerisationsreaktion wurde innerhalb von 3 Stunden eine Mischung aus 82 g Butylacrylat und 1,6 g Tricyclo-decenylacrylat zugegeben. Nach Beendigung der Monomerzugabe wurde noch eine Stunde gerührt. Der erhaltene Latex des vernetzten Butylacrylat-Polymerisats hatte einen Feststoffgehalt von 40 Gew.-%, die mittlere Teilchengröße (Gewichtsmittel) wurde zu 76 nm ermittelt, und die Teilchengrö-ßenverteilung war eng (Quotient Q = 0,29).
   ß2) 150 g des nach ß1) erhaltenen Polybutylacrylat-Latex wurden mit 40 g einer Mischung aus Styrol und Acrylnitril (Gewichtsverhältnis 75 : 25) und 60 g Wasser gemischt und unter Rühren nach Zusatz von weiteren 0,05 g Kaliumpersulfat 4 Stunden auf 80°C erhitzt. Nach Beendigung der Pfropfmischpolymerisation wurde das Polymerisationsprodukt mittels Magnesiumsulfatlösung bei 95°C aus der Dispersion gefällt, mit Wasser gewaschen und im warmen Luftstrom getrocknet. Der Pfropfgrad des Pfropfmischpolymerisats betrug 35 %, die Teilchengröße (Gewichtsmittel) betrug 91 nm.
Komponente A22:
   Pfropfkautschuk (grobteilig), der folgendermaßen hergestellt wurde:
   ß3) Zu einer Vorlage aus 1,5 g des nach ß1 hergestellten Latex wurden nach Zugabe von 50 g Wasser und 0,1 g Kaliumpersulfat im Verlauf von 3 Stunden einerseits eine Mischung aus 49 g Butylacrylat und 1 g Tricyclodecenylacrylat und andererseits eine Lösung von 0,5 g des Natriumsalzes einer C12-C18-Paraffinsulfonsäure in 25 g Wasser bei 60°C zugegeben. Anschließend wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel) des Latex wurde zu 430 nm ermittelt, die Teilchengrößenverteilung war eng (Q = 0,1).
   ß4) 150 g des nach ß3 hergestellten Latex wurden mit 20 g Styrol und 60 g Wasser gemischt und unter Rühren nach Zusatz von weiteren 0,05 g Kaliumpersulfat 3 Stunden auf 80°C erhitzt. Die bei dieser Pfropfmischpolymerisation erhaltene Dispersion wurde dann mit 20 g eines Gemisches aus Styrol und Acrylnitril im Gewichtsverhältnis 75 : 25 weitere 4 Stunden polymerisiert. Das Reaktionsprodukt wurde dann mittels einer Magnesiumsulfat-Lösung bei 95°C aus der Dispersion ausgefällt, abgetrennt, mit Wasser gewaschen und im warmen Luftstrom getrocknet.
      Der Pfropfgrad des Pfropfmischpolymerisats wurde zu 35 % ermittelt; die mittlere Teilchengröße (Gewichtsmittel) der Latexteilchen betrug 510 nm.
Komponente B:
   Polyamid 6, erhalten aus ε-Caprolactam, mit einer Viskositätszahl von 130 ml/g (gemessen an einer 0,5 Gew.-%igen Lösung in 96 Gew.-%iger Schwefelsäure nach DIN EN ISO 307:2017 und einem Anteil von Triacetondiamin von 0,16 Gew.-%. Der kristalline Anteil in der Komponente B ist zwischen 20 und 25 %.
Komponente C:
   Styrol-Acrylnitril-Maleinsäureanhydrid-Terpolymer, mit einem Gewichtsverhältnis von Styrol:Acrylnitril:Maleinsäureanhydrid von 75,5:23,5:1,0 und einer Viskositätszahl von 66 ml/g (bestimmt in 0,5 Gew.-%-iger DMF-Lösung bei 25°C nach DIN EN ISO 1628-1:2012-10.
Komponente D:
   Als Komponente D können übliche Polymeradditive, beispielsweise folgende Verbindungen und deren Mischungen eingesetzt werden:
   Maleinsäure-funktionalisierte Ethylen-Copolymere (z.B. Exxelor^{®} VA 1801 von ExxonMobil, USA);
   Lichtstabilisatoren, z.B. Stabilisatoren des Typs HALS (z.B. Tinuvin^{®}770 von BASF);
   Antioxidantien, z.B. sterisch gehinderte Phenolderivate (z.B. Irganox^{®}1076 von BASF); Wärmestabilisatoren, beispielsweise Derivate von Thioethern (z.B. Irganox^{®}PS802);
   Farbmittel, z.B. Pigmente oder Farbstoffe Antistatikmittel; Entformungsmittel.

### Allgemeine Herstellungsvorschrift

Die Komponenten wurden in einem Zweiwellenextruder bei einer Massetemperatur von 240°C bis 260°C gemischt. Die Schmelze wurde durch ein Wasserbad geleitet und granuliert.

Das erhaltene Granulat wurde unter Verwendung eines Kühlmittels aus flüssigem Stickstoff in einer kryogenen Mühle auf eine Temperatur unterhalb der niedrigsten Glasübergangstemperatur T_{g} aller enthaltenen Komponenten gebracht (unter -100 °C), und zu einem Pulver mit einer Teilchengröße unter 500 µm vermahlen.

Aus dem Pulver wurden Formkörper durch Rotomolding in einer konventionellen Vorrichtung für Rotomolding mit einer in zwei Formhälften unterteilten Form bei Werkzeugtemperaturen zwischen 250 und 300 °C und Laufzeiten von 15 min bis 45 min hergestellt. Hierfür wurde die pulverförmige Harzzusammensetzung in eine Formhälfte gegeben und die Form durch Zusammenfügen der zwei Formhälften verschlossen.

Die Form kann optional unter Stickstoff gesetzt oder vakuumiert werden bevor sie in einen Heizofen gefahren, gemäß Standard Maschinenparametern in biaxiale Rotation versetzt und auf die Betriebstemperatur erhitzt wird. Nach Ende der Laufzeit wurde die Form aus dem Heizofen gefahren und abkühlen lassen. Die Form wurde durch Trennen der zwei Formhälften geöffnet und der entstandene Formkörper entnommen.

### Beispiel 1

Als thermoplastische Harzzusammensetzung wurde eine Mischung aus 23 Gew.-% der Komponente A1, 12 Gew.-% der Komponente A21, 12 Gew.-% der Komponente A22; 46 Gew.-% der Komponente B, 2 Gew.-% der Komponente C (Styrol-Acrylnitril-Maleinsäureanhydrid-Terpolymer mit Styrol:Acrylnitril:MSA von 75,5:23,5:1,0) und 5 Gew.-% der Komponente D (i.e. Maleinsäure-funktionalisiertes Ethylen-Copolymer, wie Exxelor^{®} VA 1801 von ExxonMobil).

Hierfür wurde so viel pulverförmige Harzzusammensetzung in eine Formhälfte einer Hohlkugelform mit einem Durchmesser von ca. 35cm gegeben, dass sich eine Wandstärke von 1-2 mm im fertigen Teil ergibt. Die allgemeine Herstellungsvorschrift wurde durchgeführt, wobei die Hohlkugelform mit Stickstoff durchspült wurde. Die Ofentemperatur betrug 285 °C, die Temperatur im Inneren der Form wurde zum Ende der 30 minütigen Laufzeit auf 275 °C bestimmt. Bei dem Rotationsschmelzverfahren wurde ein Druckanstieg um 1-2 bar durch Verdampfung von flüchtigen Bestandteilen beobachtet.

Die Farbe des Formkörpers hatte die Farbe des Ausgangsmaterials. Die Oberfläche war gleichmäßig und glatt. Es wurde keine Porosität festgestellt. Der Formkörper war transluzent und mechanisch stabil: Im Falltest aus 1,5m Höhe wurden sprungelastische Eigenschaften festgestellt.

### Beispiel 2

Beispiel 1 wurde wiederholt mit dem Unterschied, dass als thermoplastische Zusammensetzung eine Mischung aus 10 Gew.-% der Komponente A1, 6 Gew.-% der Komponente A21, 4 Gew.-% der Komponente A22, 70 Gew.-% der Komponente B, 3,5 Gew.-% der Komponente C und 6,5 Gew.-% der Komponente D eingesetzt wurde.

Die Farbe des Formkörpers hatte die Farbe des Ausgangsmaterials. Die Oberfläche war gleichmäßig und glatt. Es wurde keine Porosität festgestellt.

### Beispiel 3

Beispiel 2 wurde wiederholt mit dem Unterschied, dass die Hohlkugelform nicht mit Stickstoff umspült wurde sondern stattdessen vakuumiert wurde.

Die Farbe des Formkörpers hatte die Farbe des Ausgangsmaterials. Die Oberfläche war gleichmäßig und glatt. Es wurde keine Porosität festgestellt.

### Beispiel 4

Beispiel 2 wurde wiederholt mit dem Unterschied, dass die Hohlkugelform nicht mit Stickstoff umspült wurde.

Die Farbe des Formkörpers war im Vergleich zum Ausgangsmaterial nur leicht gelb verfärbt. Es wurde keine Porosität der Oberfläche festgestellt. Die Oberfläche war gleichmäßig und glatt.

### Vergleichsbeispiel 1

Beispiel 1 wurde wiederholt mit dem Unterschied, dass anstelle der thermoplastischen Harzzusammensetzung das kommerziell erhältliche Acrylat-Styrol-Acrylnitril-Copolymer Luran^{®} S 778 T von INEOS Styrolution eingesetzt wurde. Das Pulver ließ sich aufgrund unregelmäßigen Aufschmelzens im Rotationsformen nicht verarbeiten. Es stellte sich eine inhomogene innere Oberfläche des Formteils ein. Der Formkörper war stark vergilbt und hoch zerbrechlich.

### Beispiel 5

Der Formkörper aus Beispiel 2 wurde mit einem auf Polyamid (PA) abgestimmten Primer (Hydroprimer 3941072A, Akzo Nobel) beschichtet und anschließend zunächst mit Hydrobasis paint Obsidian BLACK MB, Akzo Nobel, und anschließend mit Clear Paint Finish 7807096, Akzo Nobel, lackiert.

Nach Trocknung des Lacks wurde der Formkörper einer Temperaturwechselprüfung nach DBL 5416 A.2.10 unterzogen (Prüfdauer 3 Zyklen; 1 Zyklus besteht aus 15 Std. 105°C, 30 Min. 23±2°C, 8 Std. -40°C, 30 Min. 23±2°C). Beurteilung wurde nach 1 und 24 Std. nach Prüfungsende mit anschließender Haftungsprüfung (Dampfstrahlprüfung) gemäß DBL 5416 2.10.1 gemacht. Die Lackhaftung wurde mit der Note KW 0 nach 1h und nach 24h bewertet.

### Beispiel 6

Beispiel 5 wurde wiederholt mit dem Unterschied, dass ein auf Acrylnitril-Butadien-Styrol (ABS) abgestimmter Primer 39112702C, Akzo Nobel verwendet wurde. Die Lackhaftung wurde mit der Note KW 1 nach 1h und nach 24h bewertet.

### Vergleichsbeispiel 2

Aus der Hauptkomponente B wurden Formkörper mittels Spritzgussverfahren hergestellt. Der Formkörper wurde gemäß Beispiel 5 lackiert und untersucht. Die Lackhaftung wurde mit der Note KW 2-3 bewertet.

Daran ist zu erkennen, dass die Lackhaftung auf reinem Polyamid bei Verwendung des auf PA abgestimmten Hydroprimers, deutlich schlechter ist als bei der erfindungsgemäß verwendeten Harzzusammensetzung.

### Vergleichsbeispiel 3

Vergleichsbeispiel 2 wurde wiederholt mit dem Unterschied, dass der auf ABS abgestimmte Primer 39112702C, Akzo Nobel, verwendet wurde. Die Lackhaftung wurde mit der Note KW 4 nach 1h und nach 24h bewertet.

### Vergleichsbeispiel 4

Der Formkörper aus Vergleichsbeispiel 1 wurde gemäß Beispiel 5 lackiert und der Temperaturwechselprüfung unterzogen. Der Formkörper erweichte bei der Temperaturwechselprüfung und konnte nicht untersucht werden.

### Vergleichsbeispiel 5

Aus dem Material des Beispiels 2 wurden Formkörper mittels Spritzgussverfahren hergestellt. Der Formkörper wurde gemäß Beispiel 5 lackiert und untersucht. Die Lackhaftung wurde mit der Note KW 1 bewertet.

Daran ist zu erkennen, dass Formkörper aus der erfindungsgemäß verwendeten Harzzusammensetzung bei Verwendung des auf PA abgestimmten Primers zwar auch nach dem Spritzgussverfahren leichter zu lackieren sind als der Formkörper aus Polyamid (Vergleichsbeispiel 2), allerdings trotzdem eine schlechtere Lackhaftung aufweisen als die erfindungsgemäß mittels Rotomolding hergestellten Formkörper (Beispiel 5).

### Vergleichsbeispiel 6

Vergleichsbeispiel 5 wurde wiederholt mit dem Unterschied, dass der auf ABS abgestimmte Primer 39112702C von Akzo Nobel anstelle des auf PA abgestimmten Primers verwendet wurde. Die Lackhaftung wurde mit der Note KW 3 nach 1h und nach 24h bewertet.

Daran ist zu erkennen, dass Formkörper aus der erfindungsgemäß verwendeten Harzzusammensetzung auch bei Verwendung des auf ABS abgestimmten Primers zwar nach dem Spritzgussverfahren leichter zu lackieren sind als die Formkörper aus Polyamid (Vergleichsbeispiel 3), allerdings trotzdem eine schlechtere Lackhaftung aufweisen als die erfindungsgemäß mittels Rotomolding hergestellten Formkörper (Beispiel 6).

## Patentansprüche

1. Verwendung einer thermoplastischen Harzzusammensetzung enthaltend
a) von 5 bis 60 Gew.-%, bezogen auf das Gesamtgewicht der Komponenten (A), (B), (C) und (D), mindestens eines amorphen thermoplastischen (Co-)polymers als Komponente (A), enthaltend Wiederholungseinheiten, die von mindestens einem aromatischen Vinylmonomer stammen;
b) von 30 bis 90 Gew.-%, bezogen auf das Gesamtgewicht der Komponenten (A), (B), (C) und (D), mindestens eines teilkristallinen Polymers als Komponente (B);
c) von 0,5 bis 10 Gew.-%, bezogen auf das Gesamtgewicht der Komponenten (A), (B), (C) und (D), mindestens eines copolymeren Verträglichkeitsvermittlers als Komponente (C), der geeignet ist, die Verträglichkeit der Komponente (A) und der Komponente (B) zu verbessern; und
d) von 0 bis 10 Gew.-%, bezogen auf das Gesamtgewicht der Komponenten (A), (B), (C) und (D), weiterer Zusatzstoff(e) als Komponente (D);
wobei die Summe der Gew.-% der Komponenten (A), (B), (C) und (D) 100 Gew.-% ergibt,
für die Herstellung eines Formkörpers durch ein Rotomolding-Verfahren.

2. Verwendung gemäß Anspruch 1, wobei die Komponente (A) zusätzlich zu Wiederholungseinheiten, die von mindestens einem aromatischen Vinylmonomer stammen, Wiederholungseinheiten, die von mindestens einem Vinylcyanid-Monomer stammen, enthält.

3. Verwendung gemäß Anspruch 1 oder 2, wobei Komponente (A) eine Mischung umfasst aus:
a1) von 20 bis 60 Gew.-%, bezogen auf das Gesamtgewicht der Unterkomponenten (A1) und (A2), ungepfropftem Copolymer als Unterkomponente (A1), enthaltend Wiederholungseinheiten, die von aromatischen Vinylmonomer stammen, und Wiederholungseinheiten, die von Vinylcyanid-Monomer stammen; und
a2) von 40 bis 80 Gew.-%, bezogen auf das Gesamtgewicht der Unterkomponenten (A1) und (A2), mindestens eines Pfropfkautschuks als Unterkomponente (A2), umfassend eine kautschukartige Pfropfgrundlage und eine auf die Pfropfgrundlage gepfropfte Pfropfauflage enthaltend Wiederholungseinheiten, die von aromatischem Vinylmonomer stammen, und Wiederholungseinheiten, die von Vinylcyanid-Monomer stammen.

4. Verwendung gemäß Anspruch 3, wobei die Pfropfgrundlage der Komponente (A2) ausgewählt ist aus der Gruppe bestehend aus Alkylacrylat-basiertem Kautschuk und einem Butadien-basiertem Kautschuk.

5. Verwendung gemäß Anspruch 3 oder 4, wobei in Komponente (A) die Unterkomponente (A1) ein Styrol-Acrylnitril-Copolymer (SAN) ist, und die Unterkomponente (A2) ein Acrylnitril-Styrol-Butylacrylat-Pfropfkautschuk (ASA) und/oder ein Acrylnitril-Butadien-Styrol-Pfropfkautschuk (ABS), bevorzugt ein ASA-Pfropfkautschuk ist.

6. Verwendung gemäß mindestens einem der Ansprüche 1 bis 5, wobei die Komponente (B) ausgewählt ist aus der Gruppe bestehend aus teilkristallinen Polyethylen, teilkristallinem Polypropylen, teilkristallinem Polyester und teilkristallinem Polyamid.

7. Verwendung gemäß mindestens einem der Ansprüche 1 bis 6, wobei die Komponente (B) ein teilkristallines Polyamid, bevorzugt teilkristallines Polyamid 6 ist.

8. Verwendung gemäß mindestens einem der Ansprüche 1 bis 7, wobei die Komponente (C) Wiederholungseinheiten (C1) enthält, die von mindestens einem aromatischen Vinylmonomer, bevorzugt Styrol, stammen, Wiederholungseinheiten (C2), die von mindestens einem Vinylcyanid-Monomer, bevorzugt Acrylnitril, stammen, und Wiederholungseinheiten (C3), die von mindestens einer ethylenisch ungesättigten Dicarbonsäure oder einem ethylenisch ungesättigten Dicarbonsäure-Anhydrid, bevorzugt Maleinsäureanhydrid, stammen.

9. Verwendung gemäß mindestens einem der Ansprüche 1 bis 8, wobei die thermoplastische Harzzusammensetzung eine disperse Phase und eine kontinuierliche Phase hat, und die mittlere Domänengröße der dispersen Phase kleiner als 10 µm, bevorzugt kleiner als 5 µm, besonders bevorzugt kleiner als 2 µm, ganz besonders bevorzugt kleiner als 1 µm ist.

10. Verwendung gemäß mindestens einem der Ansprüche 1 bis 9, wobei die Komponente (D) einen polymeren Fließverbesserer umfasst, bevorzugt einen Fließverbesserer auf Basis von Acrylaten, in einer Menge von 0,1 bis 5 Gew.-%, bezogen auf das Gesamtgewicht der Komponenten (A), (B), (C) und (D).

11. Verfahren zur Herstellung eines Formkörpers durch ein Rotationsschmelzverfahren (Rotomolding), umfassend die Schritte:
(I) Einführen einer thermoplastischen Harzzusammensetzung, wie in mindestens einem der Ansprüche 1 bis 10 beschrieben, in den formgebenden Teil einer Vorrichtung für das Rotationsschmelzverfahren;
(II) Beginnen mindestens bi-axialer Drehung des formgebenden Teils der Vorrichtung für Rotationsschmelzverfahren enthaltend die thermoplastische Harzzusammensetzung;
(III) Erhitzen der thermoplastischen Harzzusammensetzung in dem sich drehenden formgebenden Teil der Vorrichtung für Rotationsschmelzverfahren auf eine Temperatur, die über dem Schmelzbereich der thermoplastischen Harzzusammensetzung liegt;
(IV) Erzeugung einer gleichmäßigen Verteilung der geschmolzenen thermoplastischen Harzzusammensetzung in dem formgebenden Teil der Vorrichtung für das Rotationsschmelzverfahren;
(V) Kühlen der verteilten thermoplastischen Harzzusammensetzung in dem formgebenden Teil der Vorrichtung für das Rotationsschmelzverfahren auf eine Temperatur von 10°- 40° C;
(VI) Beenden der Drehung des formgebenden Teils der Vorrichtung für das Rotationsschmelzverfahren;
(VII) Entnahme des Formkörpers aus dem formgebenden Teil der Vorrichtung für das Rotationsschmelzverfahren.

12. Verfahren gemäß Anspruch 11, wobei mindestens die Schritte (III), (IV) und (V) im Vakuum und/oder unter Schutzgas, bevorzugt Stickstoff oder Argon, besonders bevorzugt Stickstoff, durchgeführt werden.

13. Formkörper hergestellt durch ein Rotationsschmelzverfahren (Rotomolding), unter Verwendung einer thermoplastischen Harzzusammensetzung wie in mindestens einem der Ansprüche 1 bis 10 beschrieben.

14. Formkörper gemäß Anspruch 13, hergestellt unter Vakuum und/oder Schutzgas, bevorzugt Stickstoff oder Argon, besonders bevorzugt Stickstoff.

15. Formkörper gemäß Anspruch 13 oder 14, wobei der Formkörper zusätzlich lackiert ist.

## Claims

1. The use of a thermoplastic resin composition containing
a) from 5 to 60% by weight, based on the total weight of components (A), (B), (C) and (D), of at least one amorphous thermoplastic (co-)polymer as component (A) containing repeating units derived from at least one aromatic vinyl monomer;
b) from 30 to 90% by weight, based on the total weight of components (A), (B), (C) and (D), of at least one semi-crystalline polymer as component (B);
c) from 0.5 to 10% by weight, based on the total weight of components (A), (B), (C) and (D), of at least one copolymeric compatibiliser as component (C) capable of improving the compatibility of the component (A) and the component (B); and
d) from 0 to 10% by weight, based on the total weight of components (A), (B), (C) and (D), of further additive(s) as component (D);
wherein the sum of the percentages by weight of components (A), (B), (C) and (D) is 100% by weight,
for the production of a moulded article by a rotomoulding process.

2. The use according to claim 1, wherein component (A) contains, in addition to repeating units derived from at least one aromatic vinyl monomer, repeating units derived from at least one vinyl cyanide monomer.

3. The use according to claim 1 or 2, wherein component (A) comprises a mixture of:
a1) from 20 to 60% by weight, based on the total weight of sub-components (A1) and (A2), of ungrafted copolymer as sub-component (A1) containing repeating units derived from aromatic vinyl monomer and repeating units derived from vinyl cyanide monomer; and
a2) from 40 to 80% by weight, based on the total weight of the sub-components (A1) and (A2), of at least one graft rubber as the sub-component (A2) comprising a rubbery graft base and a graft layer grafted on the graft base, containing repeating units derived from aromatic vinyl monomer and repeating units derived from vinyl cyanide monomer.

4. The use according to claim 3, wherein the graft base of component (A2) is selected from the group consisting of alkyl acrylate-based rubber and butadiene-based rubber.

5. The use according to claim 3 or 4, wherein in component (A) the sub-component (A1) is a styrene-acrylonitrile copolymer (SAN) and the sub-component (A2) is an acrylonitrile-styrene-butyl acrylate graft rubber (ASA) and/or an acrylonitrile-butadiene-styrene graft rubber (ABS), preferably an ASA graft rubber.

6. The use according to at least one of claims 1 to 5, wherein the component (B) is selected from the group consisting of semi-crystalline polyethylene, semi-crystalline polypropylene, semi-crystalline polyester and semi-crystalline polyamide.

7. The use according to at least one of claims 1 to 6, wherein the component (B) is a semi-crystalline polyamide, preferably semi-crystalline polyamide 6.

8. The use according to at least one of claims 1 to 7, wherein the component (C) comprises repeating units (C1) derived from at least one aromatic vinyl monomer, preferably styrene, repeating units (C2) derived from at least one vinyl cyanide monomer, preferably acrylonitrile, and repeating units (C3) derived from at least one ethylenically unsaturated dicarboxylic acid or an ethylenically unsaturated dicarboxylic anhydride, preferably maleic anhydride.

9. The use according to at least one of claims 1 to 8, wherein the thermoplastic resin composition has a disperse phase and a continuous phase, and the average domain size of the disperse phase is smaller than 10 µm, preferably smaller than 5 µm, more preferably smaller than 2 µm, particularly preferably smaller than 1 µm.

10. The use according to at least one of claims 1 to 9, wherein the component (D) comprises a polymeric flow improver, preferably an acrylate-based flow improver, in an amount of 0.1 to 5% by weight, based on the total weight of components (A), (B), (C) and (D).

11. A process for producing a moulded article by rotomolding, comprising the steps of:
(I) introducing a thermoplastic resin composition as described in at least one of claims 1 to 10 into the moulding part of a rotomoulding apparatus;
(II) starting at least bi-axial rotation of the moulding part of the rotomoulding apparatus containing the thermoplastic resin composition;
(III) heating the thermoplastic resin composition in the rotating moulding part of the rotomoulding apparatus to a temperature above the melting range of the thermoplastic resin composition;
(IV) producing a uniform distribution of the molten thermoplastic resin composition in the moulding part of the rotomoulding apparatus;
(V) cooling the dispersed thermoplastic resin composition in the moulding part of the rotomoulding apparatus to a temperature of 10°- 40°C;
(VI) stopping the rotation of the moulding part of the rotomoulding apparatus;
(VII) removing the moulded article from the moulding part of the rotomoulding apparatus.

12. The process according to claim 11, wherein at least steps (III), (IV) and (V) are carried out in a vacuum and/or under inert gas, preferably nitrogen or argon, particularly preferably nitrogen.

13. A moulded article produced by rotomoulding using a thermoplastic resin composition as described in at least one of claims 1 to 10.

14. The moulded article according to claim 13, produced under vacuum and/or inert gas, preferably nitrogen or argon, particularly preferably nitrogen.

15. The moulded article according to claim 13 or 14, wherein the moulded article is additionally coated.

## Revendications

1. Utilisation d'une composition de résine thermoplastique contenant:
a) de 5 à 60 % en poids, exprimés par rapport au poids total des composants (A), (B), (C) et (D), d'au moins un (co)polymère thermoplastique amorphe en tant que composant (A) contenant des motifs répétitifs dérivés d'au moins un monomère vinylique aromatique,
b) de 30 à 90 % en poids, exprimés par rapport au poids total des composants (A), (B), (C) et (D), d'au moins un polymère semi-cristallin comme composant (B);
c) de 0,5 à 10 % en poids, exprimés par rapport au poids total des composants (A), (B), (C) et (D), d'au moins un promoteur de compatibilité avec les copolymères comme composant (C), lequel est approprié pour améliorer la compatibilité du composant (A) et du composant (B); et
d) de 0 à 10 % en poids, exprimés par rapport au poids total des composants (A), (B), (C) et (D), d'additif(s) supplémentaire(s) en tant que composant (D);
dans laquelle la somme en % en poids des composants (A), (B), (C) et (D) donne 100 % en poids,
pour la fabrication d'un corps moulé par un procédé de rotomoulage.

2. Utilisation selon la revendication 1, dans laquelle le composant (A) contient, outre des motifs répétitifs dérivés d'au moins un monomère vinylique aromatique, des motifs répétitifs dérivés d'au moins un monomère de cyanure de vinyle.

3. Utilisation selon la revendication 1 ou 2, dans laquelle le composant (A) comprend un mélange de :
a1) de 20 à 60 % en poids, exprimés par rapport au poids total des sous-composants (A1) et (A2), d'un copolymère non greffé en tant que sous-composant (A1), contenant des unités répétées dérivées du monomère vinylique aromatique, et des unités répétées dérivées du monomère de cyanure de vinyle, et
a2) de 40 à 80 % en poids, exprimés par rapport au poids total des sous-composants (A1) et (A2), d'au moins un caoutchouc greffé en tant que sous-composant (A2), comprenant une base de greffage de type caoutchouc et une couche de greffage greffée sur l'unité de greffage contenant des unités répétées dérivées de monomère vinylique aromatique, et des unités répétitives dérivées du monomère de cyanure de vinyle.

4. Utilisation selon la revendication 3, dans laquelle la base de greffage du composant (A2) est choisie dans le groupe constitué par du caoutchouc à base d'un acrylate d'alkyle et d'un caoutchouc à base de butadiène.

5. Utilisation selon la revendication 3 ou 4, dans laquelle dans le composant (A) le sous-composant (A1) est un copolymère styrène-acrylonitrile (SAN), et le sous-composant (A2) est un caoutchouc greffé acrylonitrile-styrène-butyle (ASA) et/ou un caoutchouc greffé acrylonitrile-butadiène-styrène (ABS), de préférence un caoutchouc greffé ASA.

6. Utilisation selon au moins l'une des revendications 1 à 5, dans laquelle le composant (B) est choisi dans le groupe constitué par le polyéthylène semi-cristallin, le polypropylène semi-cristallin, le polyester semi-cristallin et le polyamide semi-cristallin.

7. Utilisation selon au moins une des revendications 1 à 6, dans laquelle le composant (B) est un polyamide semi-cristallin, de préférence un polyamide-6 semi-cristallin.

8. Utilisation selon au moins une des revendications 1 à 7, dans laquelle le composant (C) contient des motifs répétitifs (C1) dérivés d'au moins un vinylmonomère aromatique, de préférence du styrène, des motifs répétitifs (C2) dérivés d'au moins un monomère de cyanure de vinyle, de préférence l'acrylonitrile, et des motifs répétitifs (C3) dérivés d'au moins un acide dicarboxylique éthyléniquement insaturé ou d'un anhydride dicarboxylique éthyléniquement insaturé, de préférence l'anhydride maléique.

9. Utilisation selon au moins une des revendications 1 à 8, dans laquelle la composition de résine thermoplastique présente une phase dispersée et une phase continue, et la dimension moyenne de la phase dispersée est inférieure à 10 µm, de préférence inférieure à 5 µm, plus préférentiellement inférieure à 2 µm, tout particulièrement de préférence inférieure à 1 µm.

10. Utilisation selon au moins une des revendications 1 à 9, dans laquelle le composant (D) comprend un amplificateur de flux polymère, de préférence un améliorant, à base d'acrylates, en une quantité de 0,1 à 5 % en poids, exprimés par rapport au poids total des composants (A), (B), (C) et (D).

11. Procédé de production d'un corps moulé par un procédé de fusion par rotation, comprenant les étapes consistant à:
(I) introduire une composition de résine thermoplastique, telle que décrite dans au moins une des revendications 1 à 10, dans la partie de formage d'un dispositif pour la mise en oeuvre d'un procédé de fusion par rotation;
(II) commencer au moins la rotation biaxiale de la partie de formage du dispositif , par la mise en oeuvre du procédé de fusion par rotation contenant la composition de résine thermoplastique;
(III) chauffage de la composition de résine thermoplastique de la partie de formage du dispositif pour la mise en oeuvre du procédé de fusion par rotation, à une température supérieure à la plage de fusion de la composition de résine thermoplastique;
(IV) réalisation d'une distribution uniforme de la composition de résine thermoplastique fondue dans la partie de formage du dispositif pour la mise en oeuvre du procédé de fusion par rotation;
(V) refroidissement à une température de 10- 40°C de la composition de résine thermoplastique répartie dans la partie de formage du dispositif pour la mise en oeuvre du procédé de fusion par rotation;
(VI) arrêt de la rotation de la partie de formage du dispositif pour la mise en oeuvre du procédé de fusion par rotation;
(VII) retrait du corps moulé de la partie de formage du dispositif pour la mise en oeuvre du procédé de fusion par rotation.

12. Procédé selon la revendication 11, dans lequel au moins les étapes (III), (IV) et (V) sont réalisées sous vide et/ou sous gaz protecteur, de préférence d'azote ou d'argon, notamment, préférentiellement, d'azote.

13. Corps moulé, préparé par un procédé de fusion par rotation (rotomoulage), en utilisant une composition de résine thermoplastique telle que décrite dans au moins une des revendications 1 à 10.

14. Corps moulé selon la revendication 13, préparé sous vide et/ou gaz protecteur, de préférence l'azote ou l'argon, plus préférentiellement l'azote.

15. Corps moulé selon la revendication 13 ou 14, dans lesquelles le corps moulé est en outre laqué.
